# EUROPEAN PATENT SPECIFICATION

(11) **EP 0 838 599 B1**
(45) Date of publication and mention of the grant of the patent: **27.03.2002**
(21) Application number: 97500160.3
(22) Date of filing: 22.09.1997
(51) Int. Cl.: F16B 5/06, F16B 21/06

(54) **Device for fast panel fixing and removal**
Vorrichtung zur schnellen Befestigung und Demontierung von Platten
Dispositif pour la fixation et le démontage rapide de panneaux.

(30) Priority: 07.10.1996 ES 9602112
(43) Date of publication of application: 29.04.1998
(73) Proprietor: GRUPO ANTOLIN-INGENIERIA, S.A., 09080 Burgos (ES)
(72) Inventor: Romero Magarino, Antonio, 09006-Burgos (ES); Morales Gallo, Francisco, 09003-Burgos (ES); Garcia Garcia-Arino, Jon, 01007-Vitoria (ES)
(74) Representative: Urteaga Simarro, José Antonio

(56) References cited:
- FR-A- 1 553 608
- FR-A- 2 668 214
- FR-A- 2 741 914
- US-A- 4 422 222
- US-A- 4 506 419

## Description

This invention relates to a device for fast panel fixing and removing, which can be used in any technical field in which it is necessary to arrange closure panels on any kind of supports, either with the aim of closing gaps for decorative effects, for technical reasons, etc., etc.

One example of this application, logically with a non-restrictive character, could be the door panels of automobile vehicles, which are situated on the door frame with the purpose of covering the different mechanisms and items that are included in the door, for example window winding mechanisms and others. In this case, as mentioned previously, the door lining panel serves the following purposes: on the one hand, to decorate the inner surface of the door and, on the other hand, ensure that space is allowed for the different technical items, such are armrests, passage for the door opening handle, etc., in the assembly.

In general terms, in the conventional assembly of panels of this type, known clips or plugs are usually used, which are housed by pressure in the panel through holes made in it; the clips or plugs protrude from the panel, so that in combination with other auxiliary items of the support base itself, they are connected by pressure between the said auxiliary items and the said clips.

The fixing units alluded to in the previous paragraph are known through references FR-A-2668214 and US-A-4422222. These references show conventional assembly units that have the disadvantage that the assembly must be carried out by connecting each auxiliary item of the panel with each plug or peg, in slow operations with certain complications, as the clips often suffer frequent breakages caused by assembling and dismantling the different connections to fit and remove the panel.

The invention claims a device whose objective is the automatic assembly and removal of panels on support plates.

Another object of the invention is to provide a device that does not suffer frequent breakages, thus providing the appropriate technical security to keep it operational

In order to achieve these two basic objectives of the invention, a set of sockets applied on the support base is combined, with some units composed of a support and a plug, combined and connected with a metal cable on the unseen side of the panel. Both items are situated in a variable number, and in mutual correspondence, on the support plate and on the panel respectively.

The sockets are positioned with their square portions in square holes cut in the support plate and are units provided with a continuous axial hole. From the square portion a cylindrical portion, which has flexible longitudinal tongues and which is joined to the square area, protrudes towards the interior of the support base.

From its free end this cylindrical portion presents a set of evenly distributed longitudinal slots that define a set of fins between them. The ends of these fins are rounded, outwardly convex and turned back towards the centre of the socket.

Towards the outer side of the square portion of the socket there is a trunco-conical projection of greater diameter than that of the cylindrical portion and lower in height than it.

On housing the socket in the support base, the square hole in the base and the square portion of the said socket will correspond with each other. The protruding tongues on the cylindrical portion fit up againts the inner side of the support base and the trunco-conical projection does the same against the outer side.

In combination with these sockets, the rear side of the panel is provided with supports, which have a base area with side fixing holes for bolts to pass through on the panel and an elevation by way of an box open towards one side on the side of the theoretical line between the said holes. The box consists of a hollow interior provided with some protruding straight ribs on its facing transversal sides and another rib on its base, with this latter rib being curvo-concave towards the interior of the said hollow, and with all the ribs being contained in the same horizontal plane.

Therefore, the interior of the hollows or gaps is separated into two portions, on one and the other side of the ribs. One of the hollows, the one farthest from the panel, is closed by the outer side of the box, given that this side is provided with a central hole connected with a surface cavity which, starting from the said hole, extends in two directions, forming angles of 45 degrees each with the transversal axis of the base of the support mentioned previously and towards the entry zone to the box.

Moreover, from the side of the box which is placed over the panel a curved arm stems outwardly and is approximately coplanary with the plane of the said side, and at the end of this arm is a hollow or cavity open upwardly in a direction that coincides with the theoretical line between the holes. This arm protrudes outside the previously mentioned open hollow, so that it does not interfere with the said opening.

The plugs, which have three well differentiated areas, are received in the supports mentioned. One of these areas is cylindrical, with a straitght generatrix, whose diameter coincides with the internal diameter of the sockets and which occupies the greater part of the height of the plug, with its end having a conical finish, above which are determined four protruding longitudinal ribs that occupy a certain length and are separated from each other at angles of 90 degrees.

Four tootheed surfaces extend between the ribs in a horizontal direction, so that the said four ribs and these four toothed surfaces correspond in height with those of the slots cut in the sockets, for the operating purposes which will be explained later.

At the opposite end of the said straight cylindrical portion, the plug is provided with a protruding perpendicular arm, whose free end is occupied by a rivet, and above this arm and a short distance from it is situated a spiral-shaped body. The spiral in question consists of a body with a rectangular base and low in height, with a protruding convex shape on one of the longer sides. In the surface of this part, three wide slots are made in an approximately helicoidal direction, between which three thin ribs are determined and meet at the geometrical centre of the spiral part.

This spiral is of such a nature that by maintaining it controlled by its perimeter, the turning of the arm of the plug in a clockwise direction makes the thin ribs of the said spiral turn and they are contracted by compression in relation to their central point, so that when turning of the arm stops, the initial position of the spiral is recovered, and consequently, the position of the plug.

The height of the arm and of the spiral of the plug coincide with the height of the two hollows in the support box, so that the plug becomes housed in this support farthest from the panel and the spiral in the hollow closest to the panel.

The cylindrical portion of the plug protrudes through to the outside of the support through the centred hole in the side of the said support farthest from the panel in a perpendicular direction to the said side.

The arm of the plug remains at the height of the opening in the side of the support farthest from the panel, and its external portion extends, limited, between the two sides of the opening in this side.

In the entry position of the plug into the support box, the arm remains at the side of the opposite opening to that occupied by the support arm itself, in which position the plug is in its rest position, with its spiral area extended.

The support and plug units so assembles are fixed to the unseen or rear side of the panel at points that correspond with those of the sockets in the support base, and a metal cable is passed through each unit, which is guided through the end openings of the arms of the support.

In these units, it is stressed that the openings in the boxes on the supports must be situated towards the cable, with the cable passing through the ends of the hooks on the arms of the supports, on which the said cable moves freely.

The cables also pass through the ends of the arms of the plugs, to which the rivets that they contain are secured to the said cable in succession, so that on moving the cable, the arms move and, with them, the plugs, whose spiral portion is subjected to compression, as well as causing the cylindrical protuberance of the plug to turn.

In the assembly, the protruding cylindrical ends of the plug are inserted into the axial hollows of the sockets, with the particularity that the conical ends of the plugs become housed in the internal quasi-conical ends of the sockets.

In the initial assembly position, the four ribs of the plug become housed in the longitudinal slots of the sockets, and the four toothed surfaces between the ribs of the plugs receive the end fins of the said sockets, which enter into the internal-dental spaces and succeed in securing the plug to the socket, all of which happens, with the simple insertion of the plug into the socket, and perfectly secures the panel to the support base.

In order to remove or dismantle the panel, it is necessary to pull the free end of the metal cable that connects the plugs and the supports, whose other end is secured to the arm of the last plug. On pulling on the cable, therefore, the arms of the plugs turn through an angle of 45 degrees and, with this, the ribs of the plugs move to occupy the positions of the fins in the sockets, opening the corresponding areas and so facilitating the extraction of the panel.

Once the panel has been extracted, the action of the spirals of the plugs, which are under stress, return to their initial position after the cable has been released, with which the panel is ready to be attached and fixed to the support base once again.

In the assembly, and when it is necessary, for reasons of surface space on the panel, for example, or for other causes, for the cable to turn, some auxiliary centring devices will be provided, on which the cable can perfectly change direction when it becomes necessary. These centring devices are composed, for example, of a cable guide by way of a pulley and a partial side wall that clasps the said pulley in order to prevent the cable from coming off.

These centring units, which can have other geometrical designs, can also be provided with cylindrical projections towards the support base, on which the corresponding recesses will be positioned.

All these and other details of the invention will be understood with greater clarity with reference to the accompanying sheet of drawings, in which the following are represented, with a non-restrictive nature.
- Figure 1 is a schematic view that represents a support base and a panel on its unseen side, in which the mechanisms of the invention are included.
- Figure 2 is an vertical cross sectional elevation of the socket.
- Figure 3 is a bottom view of the above.
- Figure 4 is the result of the cross section along the line I-I in Figure 2.
- Figure 5 is a top plan view of the supports, according to the invention.
- Figure 6 shows the cross section along the line II-II in Figure 5.
- Figure 7 is the view from the right of Figure 5.
- Figure 8 corresponds to the side view of the plug, according to the invention.
- Figure 9 is a top view of the above.
- Figure 10 is an enlarged detail of spiral, according to the invention.
- Figure 11 is the result of the cross section along the line III-III in Figure 8.
- Figure 12 represents the cross section along the line IV-IV in Figure 8.
- Figures 13 to 15 show three views of one of the possible centring devices.

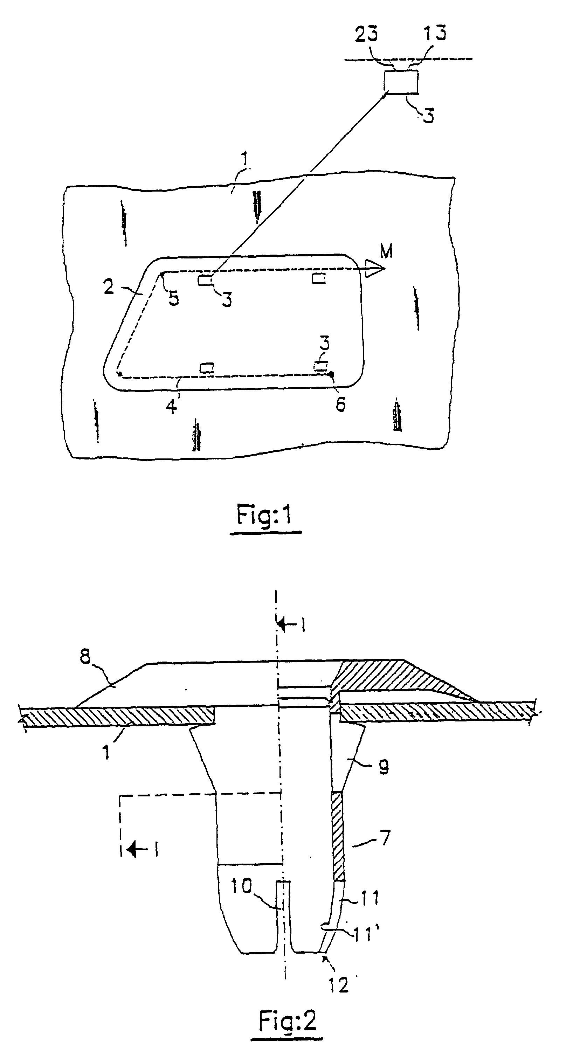

Looking now at Figure 1, it is possible to appreciate the support base (1) on which the panel (2) is fitted, with the latter shown on the reverse, i.e. unseen, side, so that the mechanisms of the invention can be seen. The different assemblies (3) of support and plug can be observed here, as can the centring devices (5), when necessary, and the cable (4), that runs round the centring devices (5) and is connected to the arms (13, 23) of the support-plug unit.

The cable (4) is free at one of its ends, whereas the other end (6) is fixed on the last of the arms of the last plug, as shown. In the normal position, the arm (23) of the plugs is in the situation most distant from the arm (13) of the supports and when the user pulls on the cable, according to the direction (M), the arms (23) turn in unison, freeing the plugs from their contact and fitting in the interior of the sockets (7) and allowing the panel to be extracted.

In accordance with Figure 2, we can see the axially hollow socket (7), which is secured to the support base (1) between its upper outer trunco-conical head (8) and the flexible tongues (9).

The portion in which these tongues are made, as well as the holes in the support base, are square. In this way, fast assembly and securing of the socket is achieved.

The inner end comprises longitudinal open slots (10) and the inclined surfaces (11) between them, whose ends (12) bend towards the axis of the socket, providing an interior (11') which is curvo-concave.

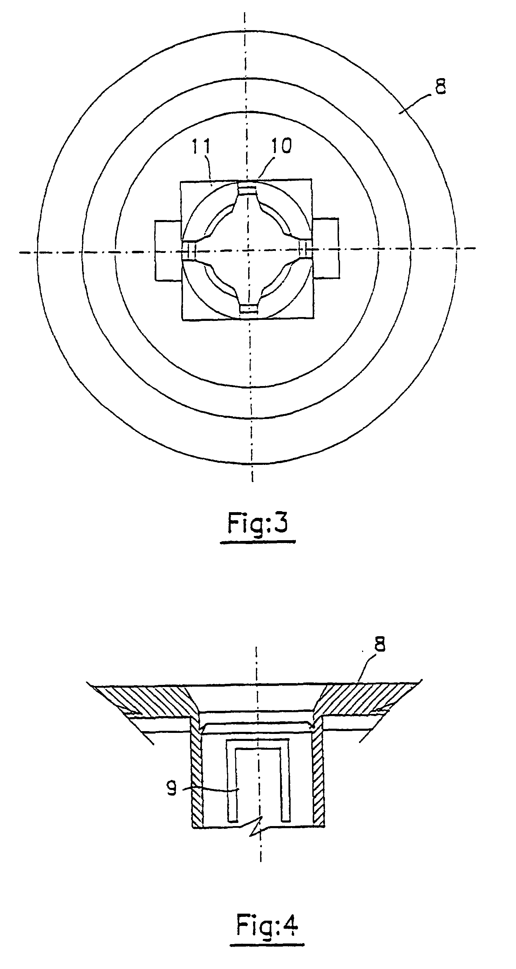

The tongues are made out of the same material as the sockets, usually plastic, as illustrated in Figure 4, which shows the cross section along I-I in Figure 2.

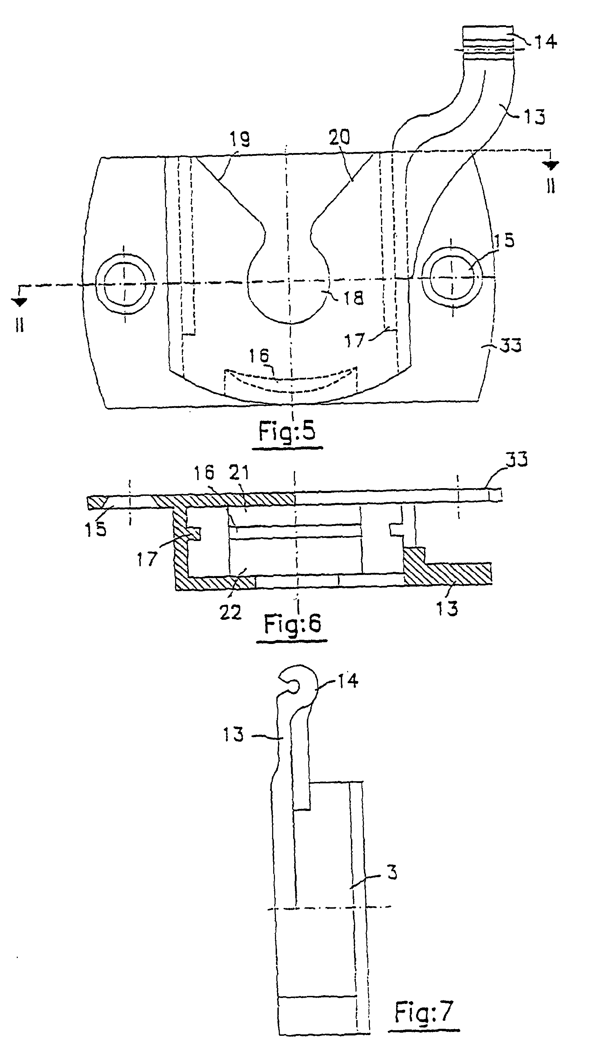

The supports (3) in Figures 5 and 7 show their side close to the panel (33) provided with holes (15) for fixing to the panel, and on this side the raised box can be observed.

The exterior of this box, farthest from the panel, is provided with a central circular hole (18) which extends towards the opening (19, 20) in an angle, situated on the entry side into the box.

From the portion on the right of the opening (19, 20) as seen in Figure 5 protrudes the fixed arm (13), whose free end (14) is U-shaped and open upwardly in order to receive the cable (4) so that it can circulate through it.

In the interior of the box are two side ribs (17) and a curvo-concave rib (16) on the base, with all three being of the same height, which delimit the spaces or hollows (21, 22) for the spiral (28) and for the arm (23) of the plug, respectively.

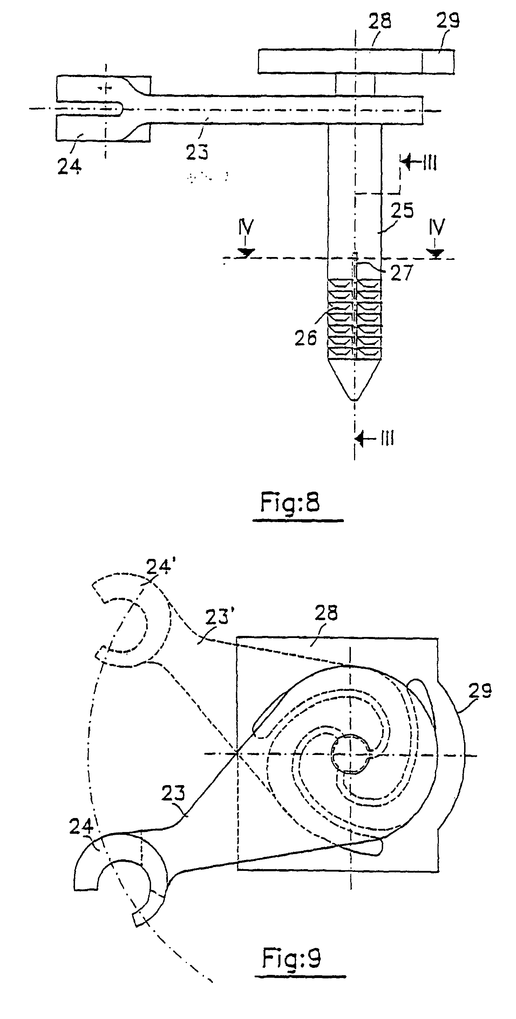

The plugs shown in Figures 8 and 9 are composed of the cylindrical portion (25) finishing in a conical end, above which the four longitudinal ribs (27) are determined and between them the toothed surfaces (26). The diameter of this cylindrical portion (25) is capable of passing through the upper central hole (18) of the support, in an outwardly vertical direction.

The upper arm (23) of this plug is finished by the recess (24) that receives a rivet fixed to the cable (4) and can rotate on its central axis with the cylindrical portion (25) obliging the spiral (28) from one position (23, 24) to another (23', 24') (Figure 9).

In the assembly position and rest position, the arm (23) remains on the side (19) of the opening of the support (3), at the other side from the fixed arm (13) and approximately occupies partly the space (22) in the said support (3).

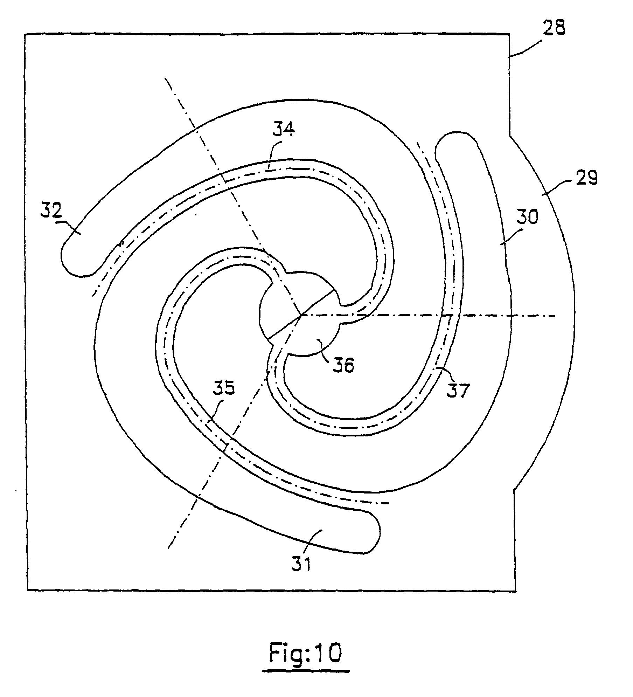

The spiral (28) of the plug forms a single part with the plug body and can also be seen enlarged in Figure 10. This part is basically rectangular and low in height, comprising three wide helices or cavities (32, 31, 30), with thin ribs (34, 35, 37) between them that meet in the centre (36), from which the rest of the plug protrudes out.

One side (29) of this helix (28) is convex at as shown, so that in the assembly of the plug in the interior of the cavity (21) of the support (3), the shorter sides of the helix remain in contact with the side ribs (17) of the said cavity (21) and the convex side (29) taken in by the front rib (16) of the cavity, thus controlling the exterior of the helix.

With the help of these figures, it is seen how the turning of the arm (23) to the position (23') can oblige the thin ribs (34, 35, 37) to bend back by compression in relation to the centre (36) in order to accumulate potential energy that will allow them to return to their original positions by themselves later, once that the action of the user on the cable (4) has stopped.

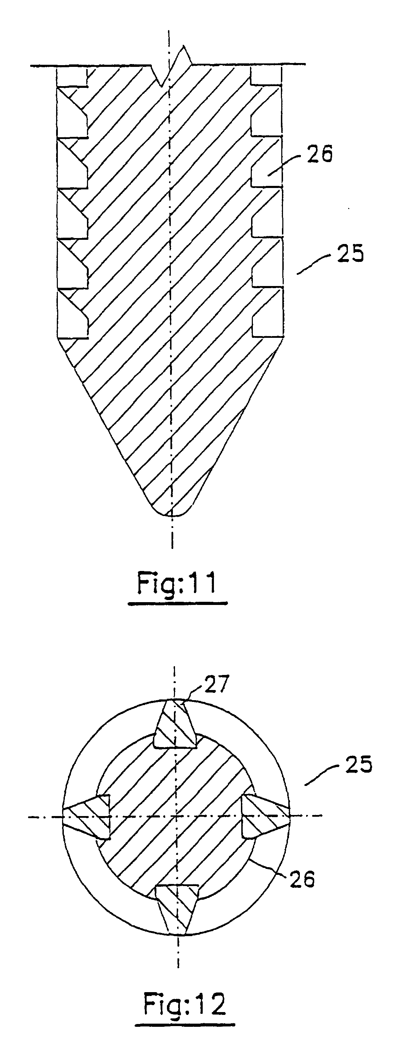

Figures 11 and 12 allow us to appreciate the longitudinal ribs (27) of the plug and the toothed surfaces (26) between the ribs in detail. The ribs (27) and the surfaces occupy alternate, evenly spaced positions all in consonance with the slots (10) and the fins (11) of the socket.

Once again in accordance with Figure 1, in the rest position of the cable, and with the conical ends of the plug housed in the central cavity of the sockets, the ribs (27) of the plug become housed in the slots (10) in the socket and the toothed surfaces (26) of the plug are subjected to pressure by the inward ends (12) of the fins (11) of the socket, making it impossible for the cylindrical portion of the plug to come out of the inside of the socket.

In this position, as mentioned previously, the arm (23) of the plug is supported on the side (19) of the upper opening in the support. The panel (2) is assembled and cannot be removed.

In order to extract or remove the plate, the cable (4) is pulled according to the direction (M) (Fig. 1), so that it slides through the ends (14) of the fixed arms of the support and pulls on the rivets fitted into the end (24) of the arms of the plugs. These turn through an angle of 45 degrees due to this effect, with the ribs (27) and the toothed surfaces (26) doing the same.

With this, the relative positions between the plug and the socket are altered. The ribs (27) of the plug act against the end recesses (12) of the fins (11) of the socket and open these fins, making it perfectly possible to pull out the panel and remove it.

When the cable is released, the pontential energy accumulated by the helices (28) make the arms (23) of the plug, pulling on the cable, return to their initial position and the plug and socket are once again in position to permit another locking connection.

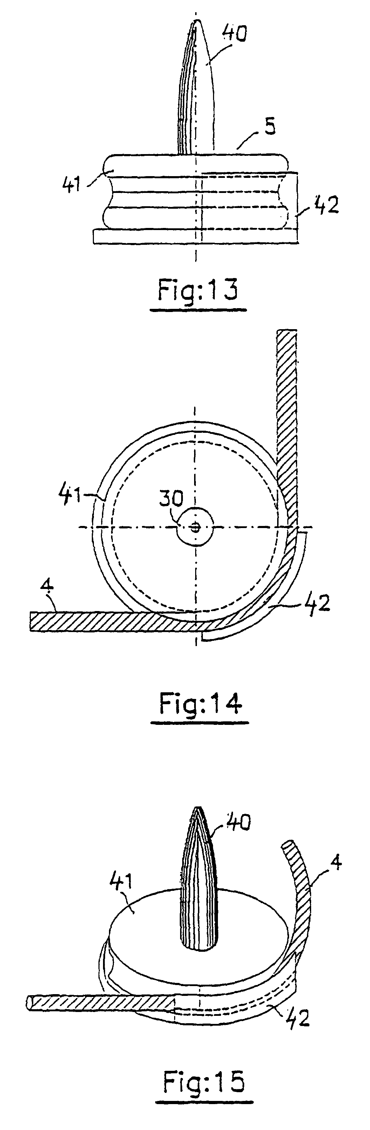

With reference to the centring devices and guide (5) for the cable shown in Figures 13, 14 and 15, we can appreciate the portions (41) by way of pulleys on which the cable (4) can run in order to change direction, partly covered by the guides (42) as well as the protruding centring (40) which will be housed in ad hoc recesses of the support base.

The centring devices will correspond with those described or can be made with other different shapes, although it must be well understood that they will be incorporated into the invention when changes in the direction of the cable on the unseen side of the panel become necessary.

## Claims

1. Device for fast panel fixing and removal, with a panel of any kind (2) which is situated on a support base (1) by means of manual pressure connection means, which are forced both for the fixing of the panel and for its removal, consisting of groups of two independent parts which are situated, respectively, in the panel and in the support base and can be operated individually in order to disconnect both items and by applying pressure in order to connect them, whereby:
- the support base (1) includes a series of sockets (7) which go through square holes cut into it, in which each socket consists of a part with an axial hole along the whole of its length, with a portion with a square cross section that fits into the hole, from which another substantially cylindrical portion provided with longitudinal flexible tongues (9) adjacent to the square portion protrudes towards the interior, with these tongues matching with the inner surface of the support base (1), in that this cylindrical portion has, starting from its free end, a set of open longitudinal slots (10), evenly distributed, which define a set of fins (11) between them, with the ends of these fins being rounded, outwardly convex and turned back towards the centre of the socket, in that on the opposite side of the portion with the square cross section, another trunco-conical portion (8) extends, with a larger diameter than that of the inner portion and lower in height than it, and further comprising :
- supports (3) fixed to the internal face or surface of the panel, with each support being composed of a part provided with a base portion provided with holes (15) to allow bolts to pass through for fixing to the panel, which is situated on the surface of the panel, in that the portion between holes has an elevation by way of a box open on one side to one side of the line between holes, while from one of the sides of the box begins a curved arm (13), coplanary with the base face of the box, at whose end (14) a hollow or cavity by way of a guide, in a parallel direction to the mentioned theoretical line between holes, in that the face farthest from the panel has a centre circular hole (18) connected to a surface opening (19, 20) which opens out towards the opening in the box with an inclination of 45 degrees towards each side of the centre, in that in the interior of the said box are two internal side ribs (17) and another frontal concave curved rib (16) towards the interior, all of which are at the same height,
- a plug composed of a longitudinal cylindrical central body (25) finished off at its end by a conical portion, above which evenly distributed ledges or longitudinal ribs (27) are formed, between which toothed surfaces (26) are created, all of which occupies a certain dimension of the central body, in that at the opposite end to the one occupied by the conical portion are situated a protruding perpendicular arm (23), provided at its free end with a transversal recess (24) for the placement of a rivet, with an end spiral (28) being situated above the said arm, with this spiral having a basically rectangular base and being low in height, with a protruding circular shape (29) on one of its longer sides, with the central part of this spiral having some wide spiral slots (30, 31, 32) that occupy the said central space and provide it with flexibility, with these slots being separated by thin ribs (34, 35, 37) that meet in the centre (36),
- a metal cable (4) which runs through the different units on the inner face of the panel, which it passes through guided by the gaps or cavities in the arms (13) of the different supports and secured to the rivets in the transversal recesses in the arms of the plugs, with one end of the cable being free (M) and the other end (6) secured to the final plug,
- the supports (3) receive the plugs in their interior, so that the central bodies of the plugs pass through the centred holes (18) in the upper faces or sides of the boxes and their conical ends with ledges (27) and toothed surfaces (26) are housed in the longitudinal holes in the sockets (7), the bases of the arms of the plugs are received in the interior of the boxes, with the ends of the said arms protruding out through the space between the openings at 90 degrees to the sockets, and the spiral is also received in the box, with its shorter sides adjusting to the straight inner ribs (17) in the said box and the longer convex side (29) on the curved frontal rib (16) of the same,
- the relative movements of the cable (4) make the plugs rotate, and these in turn flex on their lower spirals (28) so that they also make the ends of their central bodies (25) rotate, thus altering the correspondence between the end ribs and toothed areas of the plugs and the slots and fins in the sockets, so that in the rest position for the system, the toothed areas are in correspondence with the fins and in the position when the cable is pulled, the ribs of the plug are in correspondence with the fins in the sockets,
- the different support and plug units are arranged appropriately on the panel, in correspondence with the positions of the sockets secured to the support base (1), so that the relative positions of the openings in the supports are correspondent with each other in the sense of receiving the cable in the gaps in their arms in the first instance and of later securing the said cable on the ends of the arms of the plugs, finishing on the last of these,
- in the plug-socket closure position, the arms of the plugs are to be found in their most distant position in relation to the arms of the supports, and in the opening position, closer to them with an angular rotation calculated in terms of the number of fins-slots in the support and of the corresponding toothed areas-ribs on the plug.

2. Device for fast panel fixing and removal, in accordance with claim 1, **characterized in that** the rotation of the arm of the plug is of 45 degrees and the number of number of fins-slots in the support and toothed areas-ribs on the plug is four.

3. Device for fast panel fixing and removal, in accordance with claim 1, **characterized in that** in order to ensure the guiding of the cable between the support-plug units, auxiliary guides (5) are arranged, where necessary, for the said cable, with these auxiliary guides also being secured to the panel and, moreover, have some perpendicular, protruding centring device (40) which are housed in other recesses -ad hoc- in the support base.

4. Device for fast panel fixing and removal, in accordance with claim 1, **characterized in that** the spiral of the plug is configurated in each case so that on being obliged by the cable that operates the arm of the plug, it rotates a certain angle and returns to its initial position thanks to its flexibility in its continent plane controlled in the interior of the support box.

## Patentansprüche

1. Vorrichtung zur schnellen Anbringung und Abnahme von Paneelen, bestehend aus einem beliebigen Paneel (2), das auf einer Trägerbasis (1) befestigt wird, wozu handbetätigte Druckverbindungen verwendet werden, die sowohl zur Befestigung des Paneels als auch zu seiner Abnahme gedrückt werden, sie bestehen aus Gruppen von jeweils zwei unabhängigen Teilen, wovon sich jeweils eins am Paneel und das andere an der Trägerbasis befindet, zum Trennen der Elemente werden sie einzeln betätigt, zum Verbinden wird Druck auf die Elemente ausgeübt. Die Vorrichtung ist **gekennzeichnet durch**:
Die Trägerbasis (1), die eine Reihe von Steckhülsen (7) umfasst, die **durch** quadratische Löcher in derselben gesteckt werden; **dadurch** dass jede Steckhülse aus einem Stück besteht, das der Länge nach, entlang seiner Achse, durchbohrt ist, das einen Abschnitt quadratischen Querschnitts aufweist, der in das Loch der Trägerbasis passt, wovon nach innen ein weiterer, im Wesentlichen zylindrischer Abschnitt, ausgeht, der längsseits mit flexiblen Zungen (9) versehen ist, die an dem Abschnitt quadratischen Querschnitts anliegen und sich an die Innenfläche der Trägerbasis (1) anpassen, wobei der zylindrische Abschnitt, ausgehend von seinem freien Ende, einige regelmäßig angeordnete, in Längsrichtung offene Schlitze (10) aufweist, die zwischen sich Flügel (11) bilden, die in Richtung auf die Mitte der Steckhülse zu gekrümmt auslaufen; **dadurch** dass von der entgegengesetzten Seite des Abschnitts mit quadratischem Querschnitt ein weiterer kegelstumpfförmiger Abschnitt (8) größeren Durchmessers und geringerer Höhe, als der des zylindrischen Abschnitts, ausgeht.
Halterungen (3), die an der Innenseite des Paneels befestigt sind, wobei jede Halterung über ein durchgehendes, mit Löchern (15) für die Schrauben zur Befestigung am Paneel versehenes, Trägerelement verfügt, das auf der Oberfläche des Paneels angebracht wird; **dadurch** dass die Fläche zwischen den Löchern einen Aufbau nach Art eines Gehäuses aufweist, das auf einer Seite einer gedachten Linie zwischen den Löchern offen ist, von einem Seitenteil des Gehäuses gekrümmter Arm (13) ausgeht, dessen Unterseite auf derselben Ebene wie die des Gehäuses liegt und an dessen Ende (14) eine Aussparung nach Art einer Führung, parallel zu der genannten theoretischen Linie zwischen den Löchern, ausgeschnitten wird; **dadurch** dass die vom Paneel abgewandte Seite in ihrer Mitte ein rundes Loch (18) aufweist, das mit einer oberflächlichen Abformung (19,20) verbunden ist, die sich in Richtung der Öffnung des Gehäuses erweitert, mit einer Seitenneigung von jeweils 45° in Richtung der Mitte; **dadurch** dass das Innere des genannten Gehäuses zwei seitliche innere Verstärkungsrippen (17) aufweist und eine weitere frontale konkav nach innen gekrümmte (16), die sich alle auf der gleichen Höhe befinden.
Eine Klemme, bestehend aus einem länglichen, zylindrischen Zentralkörper (25), dessen Ende konisch ausläuft, über diesem konischen Abschnitt in regelmäßiger Anordnung, in Längsrichtung, Stege bzw. Rippen (27) ausgebildet werden, zwischen denen gezahnte Oberflächen (26) entstehen, was zusammen einen gewissen Teil des Zentralkörpers einnimmt; **dadurch** dass am anderen, dem konischen Ende entgegengesetzten, ein rechtwinklig abstehender Arm (23) vorgesehen ist, der an seinem freien Ende einen querliegenden Einschnitt (24) zur Anbringung eines Nietes aufweist, über dem Arm befindet sich am Ende des Zentralkörpers eine Spirale (28) rechteckigen Grundrisses und geringer Höhe sowie kreisförmiger Verdickung (29) an einer ihrer Längsseiten, die in ihrem mittleren Teil weite spiralförmige Schlitze (30, 31,32) aufweist, die diesen Zentralteil ausfüllen und ihm Flexibilität verleihen, wobei die spiralförmigen Windungen **durch** feine Rippen (34, 35, 37) voneinander getrennt sind, die in der Mitte zusammenlaufen (36).
Ein Drahtseil (4), dass **durch** die verschiedenen Einheiten, die sich auf der Innenseite des Paneels befinden, zieht, wobei es **durch** die Aussparungen der Arme (13) der verschiedenen Halterungen läuft und **durch** die Nieten in den querliegenden Einschnitten der Arme der Klemme gesichert ist, wobei ein Ende des Drahtseils (M) frei bleibt und das andere Ende (6) an der letzten Klemme befestigt wird.
Die Halterungen (3) nehmen in ihrem Inneren die Klemmen auf, in der Weise, dass die Zentralkörper der Klemmen **durch** die mittigen Löcher (18) der Oberseiten der Gehäuse laufen und ihre konischen mit Stegen und Zahnungen versehenen Enden in den Längslöchern der Steckhülsen (7) aufgenommen werden, die oberen Enden der Arme der Klemmen im Inneren der Gehäuse aufgenommen werden, wobei die freien Enden der Arme **durch** den Freiraum zwischen den 90° Öffnungen an den Steckhülsen herausragen, die Spirale ebenfalls im Gehäuse aufgenommen wird, wobei deren Querseiten an den geraden Verstärkungsrippen (17) im Gehäuse zu liegen kommen und die ausgebauchte Längsseite (29) an der gekrümmten Frontalrippe (16).
**Durch** das Wandern des Drahtseils (4) drehen sich die Klemmen, die an ihren unten gelegenen Spiralen (28) nachgeben, in der Weise, dass sich ebenfalls die Enden ihrer Zentralkörper (25) drehen, damit wird die Entsprechung der Rippen und Zahnungen an deren Ende bezüglich der Schlitze und Flügel der Steckhülsen verändert, in der Weise, dass in Ruhestellung der Vorrichtung die Zahnungen mit den Flügeln übereinstimmen und bei Zug am Drahtseil die Rippen der Klemmen mit den Flügeln der Steckhülsen.
Die verschiedenen Halterungs- und Klemmeneinheiten sind in geeigneter Weise am Paneel angeordnet, in Entsprechung zu den an der Trägerbasis (1) befestigten Steckhülsen, in der Weise, dass die Anordnung in Bezug auf die Öffnungen der Halterungen so übereinstimmt, dass sie zunächst das Drahtseil in den Aussparungen ihrer Arme aufnehmen und das Seil dann an den Enden der Arme der Klemmen befestigt wird und beim letzten dieser Arme endet.
In der Stellung, in der Klemme und Steckhülse geschlossen sind, ist der Abstand zwischen den Armen der Klemme und den Armen der Halterungen am größten während sie in geöffneter Stellung am geringsten ist, wobei die Winkeldrehung in Abhängigkeit von der Anzahl der Flügel-Schlitze der Halterung und der entsprechenden Zahnungen-Rippen der Klemme zu berechnen ist.

2. Vorrichtung zur schnellen Anbringung und Abnahme von Paneelen gemäß Anspruch 1. **gekennzeichnet dadurch, dass** die Drehung des Arms der Klemme um 45 Grad erfolgt und die Anzahl der Flügel-Schlitze der Steckhülse, bzw. der Rippen-Zahnungen der Klemme, jeweils 4 beträgt.

3. Vorrichtung zur schnellen Anbringung und Abnahme von Paneelen gemäß Anspruch 1. **gekennzeichnet dadurch, dass** zum Sichern der Führung des Drahtseils durch die Halterung-Klemme Einheiten, insoweit erforderlich, Hilfsführungen für das Drahtseil angebracht werden, die ebenfalls am Paneel befestigt sind und außerdem senkrecht dazu Zentrierüberstände aufweisen, die in weiteren -ad hoc- Einschnitten der Trägerbasis untergebracht sind.

4. Vorrichtung zur schnellen Anbringung und Abnahme von Paneelen gemäß Anspruch 1. **gekennzeichnet dadurch, dass** die Spirale der Klemme in jedem Fall so ausgelegt wird, dass sie sich, gezwungen durch das Drahtseil, das auf den Arm der Klemme einwirkt, um einen bestimmten Winkel dreht und wieder in ihre Ausgangsposition zurückkehrt, bedingt durch die Flexibilität an der sie aufnehmenden Ebene im Inneren des Gehäuses der Halterung.

## Revendications

1. Dispositif de fixation et de démontage rapide de panneaux, avec un panneau quelconque (2) monté sur un support de base (1) par des moyens de liaison manuelle sous pression, qui sont forcés pour la fixation et le démontage de ce panneau, constitués de groupes de deux pièces indépendantes situées respectivement dans le panneau et dans le support, actionnées individuellement pour dégager les deux éléments et sous pression pour la liaison de ces éléments, **caractérisé par** :
- Le support de base (1) est muni de plusieurs embouts (7) qui traversent les orifices carrés pratiqués dans le support. Chaque embout consiste en une pièce trouée de manière axiale sur toute sa longueur avec une portion de section carrée ajustée à l'orifice, dont sort vers l'intérieur une autre partie cylindrique équipée de languettes longitudinales souples (9) adjacentes à la portion carrée, et s'ajustent à la surface intérieure du support de base (1). Cette portion cylindrique comporte à partir de son extrémité libre des rainures longitudinales ouvertes (10) réparties uniformément, qui déterminent entre elles des ailettes (11) arrondies en leur extrémité vers l'extérieur dans le sens du centre de l'embout. D'autre part, sur le côté opposé de la section carrée se trouve une autre portion tronconique (8) dont le diamètre est supérieur à celui de la portion cylindrique intérieure et qui est moins haute que cette portion.
- des supports (3) fixés sur la face interne du panneau, chaque support étant constitué par une pièce munie d'une portion de base entière percée d'orifices (15) pour le passage des vis de fixation au panneau, qui est située sur la surface du panneau, dans laquelle la portion entre les orifices présente une partie plus haute en forme de boîte ouverte sur le côté de la ligne entre les orifices. De l'un des côtés de la boîte part un bras courbe (13) coplanaire avec la face de base de la boîte, à l'extrémité de laquelle (14) est pratiqué un creux en forme de guide dans le sens parallèle à la ligne théorique mentionnée entre les orifices. La face la plus éloignée du panneau présente en son centre un orifice circulaire (18) relié à un creux superficiel (19, 20) qui s'ouvre dans le sens de l'ouverture de la boîte avec une inclinaison de 45 degrés vers chaque côté du centre, dans lequel l'intérieur de cette boîte présente deux nervures latérales internes (17), et une autre frontale courbe concave (16) vers l'intérieur, toutes à la même hauteur.
- Une goupille constituée par un corps central longitudinal cylindrique (25) terminée en une portion conique, au-dessus de laquelle se dressent des bossages ou nervures longitudinales (27) régulièrement réparties et au milieu desquelles sont créées des surfaces dentées (26). Tout l'ensemble occupe une certaine surface du corps central, dans lequel l'extrémité opposée à celle occupée par la portion conique accueille un bras perpendiculaire saillant (23), muni dans son extrémité libre d'une entrée transversale (24) pour la disposition d'un rivet. Au-dessus de ce bras est située une spirale extrême (28), de base rectangulaire et de hauteur réduite, avec un bossage de composante circulaire (29) sur l'un de ses plus grands côtés ; la spirale présente dans sa partie centrale de larges rainures en spirale (30, 31, 32) qui occupent cet espace central en lui donnant de la souplesse, ces spires étant séparées par de fines nervures (34, 35, 37) qui confluent au centre.
- Un câble métallique (4) qui passe par les divers ensembles de la face interne du panneau, est guidé par les creux des bras (13) des divers supports et fixé aux rivets des entrées transversales des bras des goupilles, avec une extrémité du câble (M) libre, et l'autre extrémité (6) fixée à la goupille finale.
- les supports accueillent des goupilles en leur l'intérieur, de telle sorte que les corps centraux de celles-ci passent par les orifices centrés (18) des faces supérieures des boîtes et leurs extrémités coniques (7) les bases des bras des goupilles sont logées à l'intérieur des boîtes, les extrémités de ces bras dépassant de l'espace entre les ouvertures à 90 degrés des embouts. La spirale est aussi logée dans la boîte, et les faces plus petites de ces éléments étant ajustées aux nervures droites intérieures (17) de cette boîte et la plus grande face bombée (29) dans la nervure frontale courbe (16) de celle-ci.
- les mouvements relatifs du câble (4) font tourner les goupilles, qui fléchissent dans leurs spirales inférieures (28) de manière qu'elles fassent aussi tourner les extrémités de leurs corps centraux (25), en alternant la correspondance des nervures et des dentures extrêmes de ces derniers avec les rainures et les ailettes des embouts, de telle sorte que dans la position de repos du système, les dentures correspondent aux ailettes et dans la position de tirage du câble, les nervures de la goupille correspondent aux ailettes des embouts.
- les divers ensembles de support et de goupille sont disposés de manière adéquate sur le panneau, pour correspondre aux positions des embouts fixés au support de base (1), de telle sorte que les positions relatives des ouvertures des supports correspondent entre elles ; elles accueillent le câble dans les creux de leurs bras d'abord, et fixent ensuite ce câble dans les extrémités des bras des goupilles, pour finir dans la dernière des goupilles.
- dans la position de fermeture goupille-embout, les bras des embouts se trouvent dans leur position la plus éloignée par rapport aux bras des supports et dans la position ouverture, plus proches d'eux avec une rotation angulaire calculée en fonction du nombre d'ailette-rainures du support et des dentures-nervures correspondantes de la goupille.

2. Dispositif de fixation et de démontage rapide de panneaux, selon la 1^{ère} revendication, **caractérisé par le fait que** la rotation du bras de la goupille est de 45 degrés et que le nombre d'ailettes-rainures de l'embout et de nervures-dentures de la goupille est de quatre.

3. Dispositif de fixation et de démontage rapide de panneaux, selon la 1^{ère} revendication, **caractérisé par le fait que** pour assurer le guidage du câble entre les ensembles support-goupille, on dispose, au besoin, des guides auxiliaires pour ce câble, qui sont par ailleurs fixés au panneau et présentent des parties saillantes perpendiculaires de centrage logées dans ces entrées -ad-hoc du support de base.

4. Dispositif de fixation et de démontage rapide de panneaux, selon la 1^{ère} revendication, **caractérisé par le fait que** la spirale de la goupille est étudiée dans chaque cas pour que, lorsqu'elle est forcée par le câble qui agit sur le bras de la goupille, elle tourne d'un certain angle et revienne en sa position initiale grâce à la souplesse de celui-ci sur le plan contrôlé à l'intérieur de la boîte de support.
